# EUROPEAN PATENT SPECIFICATION

(11) **EP 1 681 332 B1**
(45) Date of publication and mention of the grant of the patent: **08.08.2018**
(21) Application number: 03786296.8
(22) Date of filing: 24.12.2003
(51) Int. Cl.: C09K 5/00, C23F 11/08

(54) **COOLING FLUID COMPOSITION**
FLÜSSIGES KÜHLMITTEL
COMPOSITION DE FLUIDE DE REFROIDISSEMENT

(30) Priority: 16.10.2003 JP 2003355951
(43) Date of publication of application: 19.07.2006
(73) Proprietor: Shishiai-Kabushikigaisha, Seki-shi, Gifu 501-3923 (JP)
(72) Inventor: EGAWA, Hiroshi, c/o SHISHIAI-KABUSHIKIGAISHA, Seki-shi, Gifu 501-3923 (JP); KADO, Hidemi, c/o SHISHIAI-KABUSHIKIGAISHA, Seki-shi, Gifu 501-3923 (JP)
(74) Representative: Davies, Gregory Mark
(86) International application number: PCT/JP2003/016648
(87) International publication number: WO 2005/037950

(56) References cited:
- EP-A- 0 299 942
- EP-A- 0 557 761
- EP-A1- 0 557 761
- EP-A1- 1 081 250
- WO-A-98/11172
- JP-A- 7 173 651
- JP-A- 62 205 183
- JP-A- 2000 239 658
- JP-A- 2002 322 467
- JP-A- 2003 213 465
- US-A- 5 290 468
- US-B1- 6 309 559

## Description

### Technical Field

The present invention relates to a coolant composition which is used as a coolant mainly for internal combustion engines. In particular, the invention relates to a coolant composition which is excellent in hard water stability and has excellent corrosion preventing properties for aluminum and aluminum alloys at high temperatures.

### Background Art

Metals suchas aluminum, aluminum alloys, cast iron, steel, brass, solder and copper are used in cooling systems for internal combustion engines. Particularly in recent years, a large amount of aluminum or aluminum alloys have been used for parts in cooling systems, for the purpose of reducing the weight of vehicle.

These metals are corroded through contact with water or air. In order to prevent this, coolant compositions which are applied to cooling systems of internal combustion engines, include a metal corrosion inhibitor, such as phosphate, amine salt, borate, nitrite, silicate or organic acids. In particular, phosphate has excellent corrosion preventing performance for aluminum and aluminum alloys, and therefore, is used in many coolant compositions.

However, phosphate reacts with hard water components and creates precipitate, and therefore, when diluted with hard water, a large amount of precipitate is created. Creation of precipitate reduces the corrosion preventing performance of the coolant, and in addition, the created precipitate settles along the circulation path of the cooling system, and thus, there is a risk that a state where the cooling system is clogged may be caused.

Meanwhile, borate tends to corrode aluminum and aluminum alloy, and silicate is inferior in stability in liquids and tends to gel easily, that is, easily separates in the case where the temperature or pH changes, or when another salt coexists, and thereby, a problem arises, such that the corrosion preventing performance is reduced.

As for amine salt and nitrite, there is a possibility that nitrosamine, which is hazardous for human, may be generated when these coexist in the coolant.

As described above, substances which are known as metal corrosion inhibitors that are effective for preventing corrosion of aluminum or aluminum alloys all have various problems when used, and therefore, development of a corrosion inhibitor exhibiting excellent corrosion preventing properties for aluminum and aluminum alloys has been desired.

As a corrosion inhibitor solving the above described problems, 2-phosphonobutane-1,2,4-tricarboxylic acid and the water soluble salt thereof have been proposed. This corrosion inhibitor exhibits excellent anti-corrosion against contact between different kinds of metals, in particular, contact corrosion between aluminum alloys, cast iron and solder and other kinds of metal, and furthermore, has excellent anti-corrosion performance against corrosion of heat transfer surfaces of aluminum. In addition, this corrosion inhibitor has only a small risk of causing eutrophication in rivers and is low in toxicity, and thus, is a corrosion inhibitor causing little pollution.

The present applicant has proposed a coolant composition using 2-phosphonobutane-1,2, 4-tricarboxylic acid having such excellent performance. This coolant composition is characterized by including phosphate, nitrate, benzoate and triazole, together with 2-phosphonobutane-1,2, 4-tricarboxylic acid or the water soluble salt thereof (see Japanese Unexamined Patent Publication H7 (1995)-173651).

However, there is a problem with this coolant composition, such that the amount of corrosion is high in the test of corrosion properties of heat transfer surfaces of aluminum in a range of high temperatures exceeding 150 ° C. JP 2002 322 467 A discloses a coolant composition which has high corrosion resistance and can inhibit the corrosion of aluminum and aluminum alloys at high temperatures The coolant comprises ethylene glycol as a main ingredient, sebacic acid, phosphoric acid, 2-phosphonobutane-1,2,4-tricarboxylic acid, calcium nitrate, magnesium nitrate, sodium nitrate, benzotriazole or tolyltriazole, sodium mercaptobenzothiazole, potassium hydroxide and water.

WO 98/11172 A1 discloses a hard water compatible phosphate-containing heat transfer fluid comprising glycol, a phosphate and a copolymer comprising an ethylenically substituted carboxylic acid or an alkali metal salt thereof and at least one aldehyde.

### Disclosure of the Invention

The present invention is made in view of the above described situation, and an object thereof is to provide a coolant composition which is excellent in hard water stability and has excellent corrosion preventing properties for aluminum and aluminum alloys at high temperatures.

In order to achieve the above described object, according to the gist of the present invention, a coolant composition having glycols as a main ingredient characterized by comprising: (a) 0.1 - 10 % by weight of at least one ingredient selected from the group consisting of alkyl benzoic acids, aliphatic dicarboxylic acid and their salts; (b) 0.01 - 2.0 % by weight of phosphate; (c) 0.01 - 0.5 % by weight of 2-phosphonobutane-1, 2, 4-tricarboxylic acid or its salt; and (d) 0.01 - 0.5 % by weight of at least one ingredient selected from the group consisting of polymers and copolymers of C₄-C₆ unsaturated monoethylene dicarboxylic acid or their salts (hereinafter referred to as monoethylene dicarboxylic acids), polymers and copolymers of C₄-C₆ unsaturated monoethylene monocarboxylic acid or their salts (hereinafter referred to as monoethylene monocarboxylic acids), and copolymers of the said C₄-C₆ unsaturated monoethylene dicarboxylic acid or their salts and C₄-C₆unsaturatedmonoethylene monocarboxylic acid or their salts (hereinafter referred to as polycarboxylic acids) is provided.

As the glycol which is a main ingredient of the coolant composition (hereinafter simply referred to as composition) according to the present invention, ethylene glycol, propylene glycol, 1, 3-butylene glycol, hexyleneglycol, diethylene glycol, glycerine can be cited, and from among these, ethylene glycol and propylene glycol are desirable, from the point of viewof chemical stability, ease of handling, price, availability.

A composition of the present invention comprises four ingredients (a) to (d) in the above described main ingredient, and these four ingredients (a) to (d) provide effects of excellent hard water stability and excellent corrosion preventing properties for aluminum and aluminum alloys at high temperatures .

The alkyl benzoic acids in ingredient (a) in the coolant composition are generally known as corrosion inhibitors having a excellent corrosion inhibiting property against aluminum and aluminum alloys. Such alkyl benzoic acids may be p-toluic acid, p-ethyl benzoic acid, p-propyl benzoic acid, p-isopropyl benzoic acid, p-tert-butyl benzoic acid or their alkali metal salts, or ammonium salts. Aliphatic dicarboxylic acids are also generally known as corrosion inhibitors having a corrosion inhibiting property against aluminum and aluminum alloys. Such aliphatic dicarboxylic acids may be oxalic acid, malonic acid, succinic acid, glutaric acid, adipic acid, piperic acid, suberic acid, azelaic acid, sebacic acid, brassylic acid, taptic acid, undecanedioic acid, dodecanedioic acid, or their alkali metal salts or ammonium salts. Among these, suberic acid, azelaic acid, sebacic acid, undecanedioic acid and dodecanedioic acid are preferred as they have an excellent corrosion inhibiting property.

Ingredient (a) is blended in a composition of the present invention in an amount of about 0.1 - 10 % by weight. This is because in the case where the content of ingredient (a) is outside the above described range, sufficient corrosion preventing performance cannot be gained for aluminum or aluminum alloys, or use thereof becomes uneconomical.

As the phosphate of ingredient (b), orthophosphate, pyrophosphate, trimetaphosphate or tetrametaphosphate may be used singly or in combination to effectively inhibit corrosion for aluminum or aluminum alloys. In addition, the effects of corrosion inhibition against iron materials such as cast iron and steel can be enhanced. The phosphate is included in the range from 0.01 - 2.0 % by weight.

Ingredient (c) is 2-phophonobutane-1,2,4-tricarboxylic acid or a water soluble salt thereof, such as sodium salt or potassium salt, and this ingredient has excellent preventing performance for contact corrosion between aluminum alloys and other kinds of metals in a liquid, and furthermore, has excellent corrosion preventing performance against corrosion on the heat transfer surface of aluminum.

2-phophonobutane-1,2,4-tricarboxylic acid or a water soluble salt thereof of ingredient (c) is blended in a composition of the present invention in an amount of about 0.01 - 0.5 % by weight. In the case where the concentration of 2-phophonobutane-1,2,4-tricarboxylic acid or a water soluble salt thereof in the coolant composition is lower than 0.01 % by weight, the above described effects of corrosion inhibition against contact corrosion between an aluminum alloy and another kind of metal and corrosion inhibiting performance against corrosion on the heat transfer surface of aluminum will not be adequately attained. In the case where the concentration exceeds 0.5 % by weight, the above described effects of corrosion inhibition against contact corrosion between solder and another kind of metal may not be attained.

The composition of the present invention further includes ingredient (d) as an essential ingredient in addition to the above described three ingredients (a) to (c). Monoethylene dicarboxylic acid among the polycarboxylic acids of ingredient (d) may be maleic acid, fumaric acid, itaconic acid, citraconic acid and mesaconic acid, as well as their alkali metal salts and ammonium. Acrylic acid, methacrylic acid, ethacrylic acid, vinyl acetic acid and their alkali metal salts and ammonium salts of the monoethylene monocarboxylic acids maybe effectively used.

Polymaleic acid, polyacrylic acid and copolymers of maleic acid and acrylic acid are preferred as a polymer and copolymer of a monoethylene dicarboxylic acid, a polymer and copolymer of a monoethylene monocarboxylic acid or a copolymer of a monoethylene dicarboxylic acid and a monoethylene monocarboxylic acid .

These polycarboxylic acids have excellent corrosion preventing properties for the heat transfer surface of aluminum or aluminum alloys at high temperatures. And furthermore, the polycarboxylic acids work together with the above described ingredient (c) to effectively suppress the creation of precipitate as a result of reaction between phosphate and a hard water component in the coolant. In particular, polymaleic acid, as well as sodium salt, potassium salt or ammonium salt thereof have excellent corrosionpreventing properties for the heat transfer surface for aluminum and aluminum alloys, and are excellent in stability when diluted with a hard water.

The molecular weight of the above described polycarboxylic acids polymer or copolymer is preferably 1000 to 20000. In the case where the molecular weight is lower than 1000, sufficient corrosion preventing properties for the heat transfer surface or sufficient hard water stability cannot be gained, while in the case where the molecular weight exceeds 20000, it is difficult to dissolve the polymer or the copolymer in the composition. The copolymer is a random polymer or block polymer.

The polycarboxylic acid are blended in a composition of present invention in an amount of about 0.01 - 0.5 % by weight, preferably 0.05 - 0.3 % by weight. The content of the polycarboxylic acid is lower than 0.01 % by weight, corrosion preventing properties for the heat transfer surface of aluminum and aluminum alloys at high temperatures and precipitate creation suppressing performance cannot be sufficiently gained, while the content exceeds 0.5 % by weight, no extra effects are gained for the exceeding amount, and use of the polycarboxylic acid is uneconomical.

A composition of the present invention may further comprise nitrate, triazole or thiazole in addition to the above described four ingredients (a) to (d) . Sodium nitrate, potassium nitrate or the like can be cited as concrete examples of this nitrate, and this nitrate is blended in an amount of about 0.01 - 1.0 % by weight, and thereby, the effects of preventing corrosion for aluminum, such as cast aluminum, can be enhanced.

Benzotriazole, tolyltriazole, 4-phenyl-1,2,3-triazole, 2-naphtotriazole, 4-nitrobenzotriazole can be cited as concrete examples of triazole, and from among these, benzotriazole and tolyltriazole are particularly desirable. In addition, benzothiazole, mercaptobenzothiazole can be cited as thiazole. The effects of preventing corrosion for copper, such as brass and copper, can be enhanced by adding any of these triazoles or thiazoles. It is preferable for the content of triazole to be blended in an amount of about 0.05 - 1.0 % by weight, and it is preferable for the content of thiazole to be an amount of about 0.01 - 1.0 % by weight.

In addition, it is desirable for the composition of the present invention may exclude silicate or borate. This is because borates tends to corrode aluminum and aluminum alloys, while silicates are inferior in stability in coolant, and tend to gel easily, that is, easily separates, when the temperature orpH changes or when another salt coexists, and thereby, a problem arises, such that the corrosion preventing performance is lowered.

Furthermore, a composition of the present invention may exclude molybdate. In this case, there is the merit that the negative effects of the molybdate, that is, acceleration of oxidation and deterioration of glycols, can be prevented.

Here, the composition of the present invention may comprise antifoaming agent, coloring agent in addition to the above described components.

### Effects of the Invention

A composition of the present invention comprises (a) 0.1 - 10 % by weight of at least one ingredient selected from the group consisting of alkyl benzoic acids, aliphatic dicarboxylic acid and their salts; (b) 0.01 - 2.0 % by weight of phosphate; (c) 0.01 - 0.5 % by weight of 2-phophonobutane-1,2, 4-tricarboxylic acid or its salt; and (d) 0.01 - 0.5 % by weight of polycarboxylic acid, and therefore, is excellent in hard water stability and has effects of providing excellent corrosion prevention properties for aluminum and aluminum alloys in a range of high temperatures, for example, exceeding 150 °C.

### Best Mode for Carrying Out the Invention

In the following, the composition of the present invention is described in further detail. The following Table 1 respectively shows preferred embodiments 1 and 2, as well as an example which does not include ingredient (d) (Comparative Example 1), an example which includes neither ingredient (c) nor (d) (Comparative Example 2) and an example which includes none of ingredients (a), (b), (c) and (d) (Comparative Example 3) for comparison.

**Table 1**

| Item | Embodiment 1 | Embodiment 2 | Comparative Example 1 | Comparative Example 2 | Comparative Example 3 |
|---|---|---|---|---|---|
| P-tert-butyl benzoic acid | 2.0 | - | 2.0 | 2.0 | - |
| P-toluic acid | - | 3.0 | - | - | - |
| Sebacic acid | 2.0 | - | 2.0 | 2.0 | - |
| Heptanoic acid | - | - | - | - | 3.0 |
| Sodium nitrate | 0.3 | 0.3 | 0.3 | 0.3 | 0.3 |
| Phosphoric acid | 0.2 | 0.2 | 0.2 | 0.2 | - |
| 2-phophonobutane-1,2, 4-tricarboxylic acid | 0.08 | 0.08 | 0.08 | - | - |
| Polymaleic acid | 0.01 | 0.01 | - | - | - |
| Tolyltriazole | 0.3 | 0.3 | 0.3 | 0.3 | 0.3 |
| 2-mercaptobenzothiazole soda | 0.15 | 0.15 | 0.15 | 0.15 | 0.15 |
| Potassium hydroxide | 2.01 | 2.07 | 2.01 | 1.99 | 1.93 |
| Water | 4 | 4 | 4 | 4 | 4 |
| Ethylene glycol | Rest | Rest | Rest | Rest | Rest |

| | | | | | |
|---|---|---|---|---|---|
| pH value (30 %) in all of the examples in Table 1 is 7.8 | | | | | |

High temperature metal corrosion test was performed on the respective samples of the above described Embodiments 1 and 2, as well as Comparative Examples 1 to 3, and a change of mass (mg/cm²) was confirmed in each metal, and whether or not there was abnormality in the appearance was confirmed. The results are shown in Table 2. Here, metal corrosion test was performed on the basis of the standard of metal corrosion property of JIS K 2234, and as the metals which to be subjected to this test, respective test pieces of cast aluminum, cast iron, steel, brass, solder and copper were used. In addition, test was carried out under conditions of 100 ° C for 1000 hours with no ventilation in a pressurized air-tight container.

**Table 2**

| Item | | Embodiment 1 | Embodiment 2 | Comparative Example 1 | Comparative Example 2 | Comparative Example 3 |
|---|---|---|---|---|---|---|
| Change of mass mg/cm³ | Cast a luminum | -0.02 | -0.01 | -0.08 | -0.05 | -0.31 |
| | Cast iron | -0.03 | -0.06 | -0.04 | -0.01 | -0.45 |
| | Steel | +0.01 | -0.08 | -0.03 | +0.33 | -0.16 |
| | Brass | -0.07 | -0.04 | +0.01 | -0.04 | -0.31 |
| | Solder | -0.09 | -0.11 | -1.04 | -0.03 | -6.49 |
| | Copper | -0.04 | -0.02 | -0.01 | -0.03 | -0.22 |
| Appearance of test piece | | No abnormality | No abnormality | Solder: tarnish | No abnormality | Cast aluminum: local corrosion |
| | | | | | | Cast iron: local corrosion |
| | | | | | | Steel: local corrosion |
| | | | | | | Solder: General Corrosion |

It can be confirmed from Table 2 that all of the samples of Embodiments 1 and 2, as well as Comparative Example 2, have excellent corrosion preventing properties for metals, particularly aluminum, and change little in appearance. In contrast, tarnish was observed on the surface of solder in Comparative Example 1. In addition, Comparative Example 3 had inferior metal corrosion preventing properties, and local corrosion was observed in the respective metals, cast aluminum, cast iron and steel, and general corrosion was observed on solder.

Next, high temperature cast aluminum heat transfer surface corrosion test was performed on the respective samples of the above described Embodiments 1 and 2, as well as Comparative Examples 1 to 3, and the change of mass (mg/cm²) was measured, and whether or not there was abnormality in the appearance was confirmed. The results are shown in Table 3. Here, high temperature cast aluminum heat transfer surface corrosion test was performed in compliance with the standard of corrosion property of cast aluminum at heat-transfer corrosion test of JIS K 2234. The test temperature was 160 ° C, and the heat-resistant glass cell was replaced by a cell made of stainless steel.

**Table 3**

| Item | Embodiment 1 | Embodiment 2 | Comparative Example 1 | Comparative Example 2 | Comparative Example 3 |
|---|---|---|---|---|---|
| Change of mass mg/cm² | -0.1 | 0.0 | -2.4 | -8.2 | -1.3 |
| Appearance of test piece | No abnormality | No abnormality | General corrosion | General corrosion | Tarnish |

It can be seen from Table 3 that the samples of Comparative Examples 1 to 3 had a large change of mass, as large as -2.4 mg/cm², -8.2 mg/cm², and -1.3 mg/cm², respectively, and in addition, corrosion was observed general corrosion or tarnish in the appearance. In contrast, the samples of Embodiments 1 and 2 had extremely small change of mass, as little as -0.1 mg/cm² and 0.0 mg/cm², respectively, and no abnormality was confirmed in the appearance, and thus, it was confirmed that they had excellent corrosion preventing properties for the cast aluminum heat transfer surface at high temperatures.

Next, test for hard water stability was performed on Embodiments 1 and 2, as well as Comparative Examples 1 and 2. As described above, phosphate reacts with a hard water component so as to create precipitate, and therefore, a large amount of precipitate is created when diluted with a hard water. Creation of precipitate reduces the corrosion preventing performance of the coolant, and in addition, the created precipitate settles along the circulation path in the cooling system and thus, there is a risk that a state where the cooling system is clogged may be caused. The degree of performance in suppressing reaction with a hard water component (hard water stability) was confirmed in the present test, and synthetic hard water where 48 mg of sodium sulfate, 165 mg of sodium chloride, 138.mg of sodium hydrogen carbonate and 275 mg of calcium chloride were dissolved in 1 1 distilled water was used, and the respective samples were diluted with this synthetic hard water, so as to have a concentration of 50 %, and existence of abnormality (precipitate) in the test liquids after 24 hours at 88 ° C was confirmed. The results are shown in Table 4. Here, Comparative Example 3 does not include ingredient (b), and thus, it was clear that the sample would not create precipitate, and was not subjected to testing for hard water stability.

**Table 4**

| Item | Embodiment 1 | Embodiment 2 | Comparative Example 1 | Comparative Example 2 |
|---|---|---|---|---|
| Appearance of liquid after test | No abnormality | No abnormality | Precipitate created | Precipitate created |

As is clear from Table 4, creation of precipitate was observed in Comparative Examples 1 and 2, while there was no precipitate in Embodiments 1 and 2 which include polymaleic acid, and it was confirmed that the samples had excellent stability in a hard water.

## Claims

1. A coolant composition comprising a glycol as a main ingredient,
(a) 0.1 - 10 % by weight of at least one ingredient selected from the group consisting of alkyl benzoic acids, aliphatic dicarboxylic acid or their salts;
(b) 0.01 - 2.0 % by weight of phosphate;
(c) 0.01 - 0.5 % by weight of 2-phophonobutane-1,2, 4-tricarboxylic acid or its salt; and
(d) 0.01 - 0.5 % by weight of at least one ingredient selected from the group consisting of polymers and copolymers of C₄-C₆ unsaturated monoethylene dicarboxylic acid or their salts, polymers and copolymers of C₄-C₆ unsaturated monoethylene monocarboxylic acid or their salts, and copolymers of the said C₄-C₆ unsaturated monoethylene dicarboxylic acid or their salts and C₄-C₆ unsaturated monoethylene monocarboxylic acid or their salts.

2. The coolant composition of Claim 1 wherein said alkyl benzoic acid is p-tert-butyl benzoic acid or p-toluic acid.

3. The coolant composition of Claim 1 wherein said aliphatic dicarboxylic acid is sebacic acid or dodecanedioic acid.

4. The coolant composition of Claim 2 wherein said aliphatic dicarboxylic acid is sebacic acid or dodecanedioic acid.

5. The coolant composition of Claim 1 wherein said unsaturated monoethylene dicarboxylic acid is polymaleic acid, or its alkaline metal salt or ammonium salt.

6. The coolant composition of Claim 2 wherein said unsaturated monoethylene dicarboxylic acid is polymaleic acid, or its alkaline metal salt or ammonium salt.

7. The coolant composition of Claim 3 wherein said unsaturated monoethylene dicarboxylic acid is polymaleic acid, or its alkaline metal salt or ammonium salt.

8. The coolant composition of Claim 4 wherein said unsaturated monoethylene dicarboxylic acid is polymaleic acid, or its alkaline metal salt or ammonium salt.

9. The coolant composition of Claim 1 further comprising 0.01 - 1.0 % by weight of nitrate.

10. The coolant composition of Claim 2 further comprising 0.01 - 1.0 % by weight of nitrate.

11. The coolant composition of Claim 3 further comprising 0.01 - 1.0 % by weight of nitrate.

12. The coolant composition of Claim 4 further comprising 0.01 - 1.0 % by weight of nitrate.

13. The coolant composition of Claim 5 further comprising 0.01 - 1.0 % by weight of nitrate.

14. The coolant composition of Claim 6 further comprising 0.01 - 1.0 % by weight of nitrate.

15. The coolant composition of Claim 7 further comprising 0.01 - 1.0 % by weight of nitrate.

16. The coolant composition of Claim 8 further comprising 0.01 - 1.0 % by weight of nitrate.

17. The coolant composition of Claims 1 to 16 further comprising 0.05 - 1.0 % by weight of triazole or 0.01 - 1.0 % by weight of thiazole.

## Patentansprüche

1. Kühlmittelzusammensetzung, umfassend ein Glykol als Hauptbestandteil,
(a) 0,1-10 Gew.-% mindestens eines Bestandteils aus der Gruppe bestehend aus Alkylbenzoesäuren, aliphatischen Dicarbonsäuren oder Salzen davon;
(b) 0,01-2,0 Gew.-% Phosphat;
(c) 0,01-0,5 Gew.-% 2-Phosphonbutan-1,2,4-tricarbonsäure oder ein Salz davon; und
(d) 0,01-0,5 Gew.-% mindestens eines Bestandteils aus der Gruppe bestehend aus Polymeren und Copolymeren von ungesättigten C₄-C₆-Monoethylendicarbonsäuren oder Salzen davon, Polymeren und Copolymeren von ungesättigten C₄-C₆-Monoethylenmonocarbonsäuren oder Salzen davon und Copolymeren der ungesättigten C₄-C₆-Monoethylen-dicarbonsäuren oder Salze davon und ungesättigten C₄-C₆-Monoethylenmonocarbonsäuren oder Salze davon.

2. Kühlmittelzusammensetzung nach Anspruch 1, wobei es sich bei der Alkylbenzoesäure um p-tert-Butylbenzoesäure oder p-Toluylsäure handelt.

3. Kühlmittelzusammensetzung nach Anspruch 1, wobei es sich bei der aliphatischen Dicarbonsäure um Sebacinsäure oder Dodecandisäure handelt.

4. Kühlmittelzusammensetzung nach Anspruch 2, wobei es sich bei der aliphatischen Dicarbonsäure um Sebacinsäure oder Dodecandisäure handelt.

5. Kühlmittelzusammensetzung nach Anspruch 1, wobei es sich bei der ungesättigten Monoethylendicarbonsäure um Polymaleinsäure oder ein Alkalimetallsalz oder Ammoniumsalz davon handelt.

6. Kühlmittelzusammensetzung nach Anspruch 2, wobei es sich bei der ungesättigten Monoethylendicarbonsäure um Polymaleinsäure oder ein Alkalimetallsalz oder Ammoniumsalz davon handelt.

7. Kühlmittelzusammensetzung nach Anspruch 3, wobei es sich bei der ungesättigten Monoethylendicarbonsäure um Polymaleinsäure oder ein Alkalimetallsalz oder Ammoniumsalz davon handelt.

8. Kühlmittelzusammensetzung nach Anspruch 4, wobei es sich bei der ungesättigten Monoethylendicarbonsäure um Polymaleinsäure oder ein Alkalimetallsalz oder Ammoniumsalz davon handelt.

9. Kühlmittelzusammensetzung nach Anspruch 1, ferner umfassend 0,01-1,0 Gew.-% Nitrat.

10. Kühlmittelzusammensetzung nach Anspruch 2, ferner umfassend 0,01-1,0 Gew.-% Nitrat.

11. Kühlmittelzusammensetzung nach Anspruch 3, ferner umfassend 0,01-1,0 Gew.-% Nitrat.

12. Kühlmittelzusammensetzung nach Anspruch 4, ferner umfassend 0,01-1,0 Gew.-% Nitrat.

13. Kühlmittelzusammensetzung nach Anspruch 5, ferner umfassend 0,01-1,0 Gew.-% Nitrat.

14. Kühlmittelzusammensetzung nach Anspruch 6, ferner umfassend 0,01-1,0 Gew.-% Nitrat.

15. Kühlmittelzusammensetzung nach Anspruch 7, ferner umfassend 0,01-1,0 Gew.-% Nitrat.

16. Kühlmittelzusammensetzung nach Anspruch 8, ferner umfassend 0,01-1,0 Gew.-% Nitrat.

17. Kühlmittelzusammensetzung nach den Ansprüchen 1 bis 16, ferner umfassend 0,05-1,0 Gew.-% Triazol oder 0,01-1,0 Gew.-% Thiazol.

## Revendications

1. Composition de liquide de refroidissement comprenant un glycol en tant qu'ingrédient principal,
(a) 0,1-10 % en poids d'au moins un ingrédient choisi dans le groupe constitué par les acides alkylbenzoïques, les acides dicarboxyliques aliphatiques ou leurs sels ;
(b) 0,01-2,0 % en poids de phosphate ;
(c) 0,01-0,5 % en poids d'acide 2-phosphonobutane-1,2,4-tricarboxylique ou de son sel ; et
(d) 0,01-0,5 % en poids d'au moins un ingrédient choisi dans le groupe constitué par les polymères et copolymères d'acides dicarboxyliques monoéthyléniques insaturés en C₄-C₆ ou de leurs sels, les polymères et copolymères d'acides monocarboxyliques monoéthyléniques insaturés en C₄-C₆ ou de leurs sels et les copolymères desdits acides dicarboxyliques monoéthyléniques insaturés en C₄-C₆ ou leurs sels et acides monocarboxyliques monoéthyléniques insaturés en C₄-C₆ ou leurs sels.

2. Composition de liquide de refroidissement selon la revendication 1 dans lequel ledit acide alkylbenzoïque est l'acide *p*-*tert*-butylbenzoïque ou l'acide *p*-toluique.

3. Composition de liquide de refroidissement selon la revendication 1 dans lequel ledit acide dicarboxylique aliphatique est l'acide sébacique ou l'acide dodécanedioïque.

4. Composition de liquide de refroidissement selon la revendication 2 dans lequel ledit acide dicarboxylique aliphatique est l'acide sébacique ou l'acide dodécanedioïque.

5. Composition de liquide de refroidissement selon la revendication 1 dans lequel ledit acide dicarboxylique monoéthylénique insaturé est le poly(acide maléique) ou son sel de métal alcalin ou sel d'ammonium.

6. Composition de liquide de refroidissement selon la revendication 2 dans lequel ledit acide dicarboxylique monoéthylénique insaturé est le poly(acide maléique) ou son sel de métal alcalin ou sel d'ammonium.

7. Composition de liquide de refroidissement selon la revendication 3 dans lequel ledit acide dicarboxylique monoéthylénique insaturé est le poly(acide maléique) ou son sel de métal alcalin ou sel d'ammonium.

8. Composition de liquide de refroidissement selon la revendication 4 dans lequel ledit acide dicarboxylique monoéthylénique insaturé est le poly(acide maléique) ou son sel de métal alcalin ou sel d'ammonium.

9. Composition de liquide de refroidissement selon la revendication 1 comprenant en outre 0,01-1,0 % en poids de nitrate.

10. Composition de liquide de refroidissement selon la revendication 2 comprenant en outre 0,01-1,0 % en poids de nitrate.

11. Composition de liquide de refroidissement selon la revendication 3 comprenant en outre 0,01-1,0 % en poids de nitrate.

12. Composition de liquide de refroidissement selon la revendication 4 comprenant en outre 0,01-1,0 % en poids de nitrate.

13. Composition de liquide de refroidissement selon la revendication 5 comprenant en outre 0,01-1,0 % en poids de nitrate.

14. Composition de liquide de refroidissement selon la revendication 6 comprenant en outre 0,01-1,0 % en poids de nitrate.

15. Composition de liquide de refroidissement selon la revendication 7 comprenant en outre 0,01-1,0 % en poids de nitrate.

16. Composition de liquide de refroidissement selon la revendication 8 comprenant en outre 0,01-1,0 % en poids de nitrate.

17. Composition de liquide de refroidissement selon les revendications 1 à 16 comprenant en outre 0,05-1,0 % en poids de triazole ou 0,01-1,0 % en poids de thiazole.
